# EUROPÄISCHE PATENTSCHRIFT

(11) **EP 4 451 665 B1**
(45) Veröffentlichungstag und Bekanntmachung des Hinweises auf die Patenterteilung: **22.01.2025**
(21) Anmeldenummer: 24165302.1
(22) Anmeldetag: 13.07.2017
(51) Int. Cl.: H04N 7/18, G08B 13/196, H04N 21/8547

(54) **VERFAHREN ZUM EINLESEN UND AUFBEREITEN VON VIDEOBILDERN IN ECHTZEIT**
METHOD FOR IMPORTING AND PROCESSING VIDEO IMAGES IN REAL-TIME
PROCÉDÉ DE LECTURE ET DE PRÉPARATION D'IMAGES VIDÉO EN TEMPS RÉEL

(30) Priorität: 07.11.2016 AT 510132016
(43) Veröffentlichungstag der Anmeldung: 23.10.2024
(62) Teilanmeldung aus: 24161162.3
(73) Patentinhaber: TB-Traxler GmbH, 3494 Gedersdorf (AT)
(72) Erfinder: Traxler, Johannes, 3500 Imbach (AT)
(74) Vertreter: Burgstaller, Peter

(56) Entgegenhaltungen:
- EP-A1- 2 879 381
- EP-A2- 2 147 844
- EP-A2- 2 341 710
- DE-A1- 102014 008 808
- DE-A1- 102015 014 190

## Beschreibung

### Technisches Gebiet

Die vorliegende Erfindung betrifft ein Verfahren zum Einlesen und Aufbereiten von Videobildern in Echtzeit, bei dem eine oder mehrere Videokameras Bilder liefern, wobei die Bilder digitalisiert und in einem Speicher abgespeichert werden, wonach die Bilder zumindest einem Monitor zugeführt werden.

### Stand der Technik

Im Fernsehbereich wird zwischen (Video-)Bildern und Videosignalen unterschieden. Die Trennung ist notwendig, um einerseits ein fertiges Video-Einzelbild von einem elektronisch definierten Videosignal zur Übertragung zu unterscheiden, und um andererseits die unterschiedlichen Aufgaben von Bild und Videosignal zu trennen. Mit Bild wird ein ganzes Bild bezeichnet, wie es am Bildschirm zu sehen ist, während das Videosignal notwendig ist, um das Bild elektronisch zu übertragen.

Klassische Anlagen zur Bildübertragung waren analog aufgebaut, d.h. das von der Videokamera aufgenommene Bild wurde analog übertragen und unmittelbar auf einem Bildschirm angezeigt. Störungen waren sofort am Bildschirm zu erkennen, sei es infolge eines Kameraproblems oder sei es infolge eines Problems entlang der Übertragungskette. Andererseits war ein Zeitversatz zwischen Kamera und Bildschirm - abgesehen von der geringen Signallaufzeit - ausgeschlossen.

Moderne Lösungen zur Bildübertragung sind darauf ausgelegt, ein möglichst hochwertiges Bild zu erzeugen bzw. Störungen zu unterdrücken. Dazu gehören die automatischen Einregelvorgänge in der Videokamera, die Übertragungsstrecke und die Aufbereitung des Bildes oder der Bilder vor dem Bildschirm. Ausgehend von den Anforderungen des Unterhaltungsfernsehens sollten keine Fehler sichtbar werden, besser ist es, wenn während des Fehlerzustandes ein gespeichertes Bild am Bildschirm angezeigt wird. Aus diesem Grund weisen alle modernen Übertragungssysteme eher komplexe Elektronik-Schaltungen mit Bildspeichern auf, beginnend in der Videokamera, gegebenenfalls in der Übertragungsstrecke und schließlich in der Bildaufbereitung. Sobald es aber zu digitaler Bildbearbeitung und Bildspeicherungen kommt, ist ein Zeitversatz zwischen Kamera und Monitor nicht ausgeschlossen, bei Fernsehsendungen sogar sehr häufig, wie man beobachten kann, wenn dieselbe Live-Veranstaltung von verschiedenen Fernsehanstalten übertragen wird. Verzögerungen von einigen Sekunden sind hier die Regel.

Die gemeinsame Darstellung mehrerer Videobilder auf einem Monitor ist seit Jahrzehnten bekannt. Typische Beispiele sind Überwachungsmonitore in Supermärkten, wo z.B. die Bilder von vier Kameras auf einem Monitor dargestellt werden. Die die Bilder kontrollierende Person kann jederzeit das Bild einer Kamera als Vollbild darstellen oder aber andere Kameras auf den Monitor schalten, sollte sie etwas Verdächtiges erkennen.

Ebenso bekannt sind die Überwachungsmonitore in der Wiener U-Bahn, damit der Fahrer sieht, wann alle Fahrgäste aus- und eingestiegen sind und er den Zug abfertigen und die Türen schließen kann. Manchmal werden dabei die Bilder zweier Kameras auf einem Monitor angezeigt. Bei diesen beiden Anwendungen werden die Teilbilder einfach nebeneinander und/oder übereinander ohne Übergänge dargestellt.

Analog ist dies nur möglich, wenn alle Videokameras miteinander synchronisiert sind, und auch dann nur mit speziell adaptierten Videokameras und großem Schaltungsaufwand.

Stand der Technik ist es daher, die vier hereinlaufenden Einzelbilder zu digitalisieren, zu speichern und anschließend aus den digital vorliegenden, gespeicherten Bildern das neue, zusammengesetzte Bild zu erstellen und zum Bildschirm zu übertragen. Wenn die Übertragung zum Bildschirm analog erfolgt, müssen die notwendigen Synchronsignale neu generiert werden.

EP2341710 offenbart ein Verfahren, bei welchem die Latenz eines Kamerasignals ausschließlich einen Einfluss auf die Darstellung des Bildes auf dem der Kamera zugeordneten Monitor und keinen Einfluss auf die Darstellung der weiteren Bilder in den weiteren Kameras hat.

Weiters sind so genannte elektronische Rückspiegel bekannt, bei denen drei Kamerabilder (entsprechend linkem Außenspiegel, rechtem Außenspiegel und Innenspiegel) übergangsfrei zusammengesetzt werden ("stitching") und dem Fahrer auf einem Monitor dargestellt werden, sodass der Fahrer mit einem Blick das gesamte Verkehrsgeschehen hinter ihm erfassen kann, und das ohne toten Winkel. Ein Beispiel ist im Internet unter https://www.macnica.eu/de/node/219 zu finden.

Nachteil dieser Lösungen ist, dass infolge der Digitalisierung größere Verzögerungen nicht auszuschließen sind. Dies ist bei einer Überwachung von Verkehrssystemen unbrauchbar, da der Zeitversatz von der den Bildschirm beobachtenden Person nicht erkannt werden kann. In zwei Sekunden kann ein anfahrender Zug z.B. schon einen Meter weit gefahren sein, während eine kritische Situation am Bahnsteig auf dem Bildschirm nicht zu erkennen ist. Bei einem Fahrzeug mit 100 km/h wären es über 50 m, die ohne Sichtkontakt gefahren werden. Leider hat es infolge solch eines Zeitversatzes bereits ein Todesopfer gegeben.

Aber auch ohne Aufbereitung der Bilder (wie "stitching") werden Bilder oft in einem Speicher abgespeichert und von diesem ausgelesen und einem Monitor zugeführt, ein Beispiel ist die oben erwähnte Darstellung von vier Kamerabildern auf einem Monitor. Man speichert die Videosignale aller Kameras digital ab und liefert dann von jeder Kamera nur jeden zweiten Bildpunkt jeder Zeile und nur jede zweite Zeile zum Monitor, sodass das Bild nur einen Quadranten einnimmt. Auch hier kann es zu störendem Zeitversatzt kommen, denn es ist immer denkbar, dass eine Kamera ausfällt und kein Signal mehr liefert. Dann bleibt das letzte Bild im Speicher liegen und wird konstant als Standbild dargestellt.

### Kurzbeschreibung der Erfindung

Es ist Aufgabe der vorliegenden Erfindung, ein Verfahren der eingangs genannten Art zu schaffen, bei dem eine zu stark verzögerte Wiedergabe von Videobildern verhindert ist.

Diese Aufgabe wird durch ein Verfahren der eingangs genannten Art erfindungsgemäß dadurch gelöst, dass alle Videobilder mit einem Zeitstempel versehen werden, der zusammen mit den Videobildern im Speicher abgespeichert wird, dass danach der Zeitstempel des Videobildes oder - bei gleichzeitiger Wiedergabe mehrerer Videobilder - der Zeitstempel aller wiedergegebenen Videobilder ausgelesen und mit der aktuellen Zeit verglichen wird und das Signal nur dann dem zumindest einen Monitor zugeführt wird, wenn der Zeitstempel maximal eine vorgegebene Zeitspanne zurückliegt bzw. wenn alle Zeitstempel maximal eine vorgegebene Zeitspanne zurückliegen.

Der Erfindung liegt die Erkenntnis zu Grunde, dass es besser ist, gar kein Bild anzuzeigen als ein veraltetes Bild, denn dadurch wird sofort erkennbar, dass keine brauchbare Information vorliegt. Wenn man z.B. die vorgegebene Zeitspanne auf 100 ms festlegt, dann ist der maximale Zeitversatz deutlich unterhalb der für Menschen typischen Reaktionszeit, stört also nicht; ist der Zeitversatz höher, dann wird kein sinnvolles Bild (d.h. z.B. nur schwarz, nur weiß, ein Muster) dargestellt, sodass die Störung sofort erkennbar ist.

Der Begriff "Zeitstempel" ist allgemein zu verstehen. Es ist gleichgültig, welcher Zeitpunkt als "Null" angesehen wird, das kann also z.B. das Einschalten des Systems oder ein "Reset-Signal sein. Es ist auch gleichgültig, in welchen Einheiten gemessen wird. Die Einheit kann also z.B. die Bildwiederholrate sein (meist 40 ms), d.h. es werden die digitalisierten Bilder einfach durchnummeriert. Aus der Nummer des Bildes und dem Zeitpunkt des Einschaltens ergibt sich dann die "echte" Zeit, wann das Bild aufgenommen wurde. Diese Zeit muss aber gar nicht errechnet werden. Es genügt, wenn zur Kontrolle einfach ein Zähler mitläuft, der beim Einschalten des Systems bzw. bei einem Reset-Signal auf Null gesetzt wird und der alle 40 ms um 1 hinaufzählt Wenn dieser Zähler mit der Nummer des Bildes verglichen wird, kann ab einer bestimmten Abweichung von z.B. 3 oder 5 Bildern (entsprechend 120 ms bzw. 200 ms) ein Bild als veraltet erkannt werden.

Wenn eine Aufbereitung der Bilder stattfindet, dann sollen die abgespeicherten Bilder aufbereitet werden, nachdem sie mit dem Zeitstempel versehen wurden, und der Zeitstempel nach der Aufbereitung ausgelesen werden und dann die aufbereiteten Bilder dem zumindest einen Monitor zugeführt werden. Auf diese Weise wird die Zeit, die für die Aufbereitung notwendig ist, miterfasst.

Gemäß einer ersten Ausführungsform der Erfindung liefern die eine oder die mehreren Videokameras die Bilder als Analogsignal und werden die aufbereiteten Bilder in ein Analogsignal konvertiert, bevor sie dem mindestens einen Monitor zugeführt werden. In diesem Fall werden die eintreffenden Videobilder mit dem Zeitstempel versehen und wird der Zeitstempel des Videobildes oder - bei gleichzeitiger Wiedergabe mehrerer Videobilder - der Zeitstempel aller wiedergegebenen Videobilder bei der Konvertierung der aufbereiteten Bilder in ein Analogsignal ausgelesen und verglichen.

Bei der ersten Ausführungsform wird also versucht, so weit wie möglich mit analogen Signalen zu arbeiten. So liefert die Videokamera analoge Signale (ohne vorheriger digitaler Aufbereitung), sodass hier keine Verzögerung eintreten kann. Auch der Monitor arbeitet analog, zeigt also unmittelbar das anliegende Videosignal an. Auch hier kann somit keine Verzögerung eintreten.

Wie zuvor erwähnt ist es jedoch schwierig, ganz ohne Digitalisierung auszukommen, insbesondere wenn Bilder mehrerer Videokameras auf einem Monitor angezeigt werden sollen. Hier geht die Erfindung den Weg, dass bei der Digitalisierung jedes Bild mit einem Zeitstempel versehen wird, und dass gespeicherte Bilder nur dann verwertet werden, wenn der Zeitstempel nicht allzu lang zurückliegt. Sollte also eine unerwartete Verzögerung eintreten (z.B. weil ein Bild im Speicher "liegen bleibt" und nicht- z.B. infolge eines Defekts des Analog-Digital-Konverters- durch neue Bilder überschrieben wird), wird dies erkannt und das Bild wird gar nicht angezeigt.

Nach einer zweiten Ausführungsform der Erfindung liefern die eine oder die mehreren Videokameras die Bilder als Digitalsignal. In diesem Fall ist es am sichersten, wenn die Videobilder bereits in der einen oder in den mehreren Videokameras mit dem Zeitstempel versehen werden. Wenn die eine oder die mehreren Videokameras die Bilder als SDI-Signale liefern, ist jedoch auch im Fall von Digitalsignalen ein Zeitversatz praktisch unmöglich: Der CCD-Sensor digitalisiert mit einem A/D-Wandler die Bildpunkte nacheinander, und diese Digitalwerte werden im SDI-Protokoll ausgegeben, entweder über ein Koax-Kabel oder über eine Zweidrahtleitung, und unabhängig von den empfangenden Geräten, sodass es auch in diesem Fall ohne Sicherheitsrisiko möglich ist, dass erst die eintreffenden Videobilder mit dem Zeitstempel versehen werden. (Hier gibt es also kaum einen Unterschied zu Analogsignalen, lediglich durch das serielle Abarbeiten der Bildpunkte entsteht ein geringer, aber konstanter Zeitversatz in der Größenordnung von 20 ms.) Vorteil der zweiten Lösung ist, dass herkömmliche SDI-Videokameras verwendet werden können.

Im Gegensatz dazu liefern IP-Kameras die Daten über Netzwerkkabel und nehmen Rücksicht auf den gesamten Datenverkehr im Netzwerk; und da Netzwerke überlastet und/oder gestört sein können, kann es zu unvorhersehbaren Verzögerungen kommen. Bei Verwendung von IP-Kameras sollte somit der Zeitstempel unbedingt bereits in der Kamera erzeugt werden.

Es ist zweckmäßig, wenn das Videobild aus dem Speicher gelöscht wird, sobald es aufbereitet und einem Monitor zugeführt wurde. Dies stellt eine zusätzliche Sicherheitsmaßnahme dar, um zu verhindern, dass veraltete Bilder angezeigt werden. Selbst wenn ein Zeitstempel versehentlich als aktuell erkannt wird, obwohl er veraltet ist, kann solch ein veraltetes Bild höchstens einmal angezeigt werden, was kaum bemerkt werden kann (die übliche Bildwiederholfrequenz ist 25Hz). Im Falle der ersten Ausführungsform wird das Videobild aus dem Speicher gelöscht, sobald es in ein Analogsignal konvertiert wurde.

Bei Analogsignalen sollten in diesem Fall zumindest zwei Speicher verwendet werden, wobei die Videosignale abwechselnd in diese zwei Speicher geschrieben werden, wobei jeweils nach dem Löschen des Bildes umgeschaltet wird. Die Videosignale werden immer in den zuletzt gelöschten Speicher geschrieben. Wenn zum Zeitpunkt x der Speicher 1 gelöscht wird, dann liegen zum Zeitpunkt x + 40 ms vollständige Bilder im Speicher 1 vor, und es kann mit dem Auslesen und Konvertieren in ein Analogsignal begonnen werden. Zu diesem Zeitpunkt wird Speicher 2 gelöscht, und die weiteren Videosignale werden in den Speicher 2 geschrieben. Da auch die Übertragung zum Monitor 40 ms dauert, kann zum Zeitpunkt x + 80 ms der Speicher 1 gelöscht werden. In den nächsten 40 ms wird dann Speicher 2 in ein Analogsignal konvertiert und zum Monitor übertragen, und die Videosignale werden wieder in Speicher 1 gespeichert.

Wenn Digitalsignale zum Monitor übertragen werden, erfolgt diese Übertragung im Vergleich zur Bildwiederholungsrate extrem schnell, sodass man mit einem einzigen Speicher auskommt: Denn wenn die Bildübertragung und das Löschen nahezu instantan erfolgen, stehen zwischen zwei Bildübertragungen praktisch die gesamten 40 ms zur Verfügung, in denen die Videosignale abgespeichert werden können, sodass auch bei Verwendung von nur einem Speicher stets vollständige Bilder vorhanden sind.

Zusätzlich oder alternativ dazu ist es möglich, die Videobilder aus dem Speicher in regelmäßigen Zeitabständen, beispielsweise alle 200 ms, zu löschen.

In beiden Fällen kann die Sicherheit noch dadurch gesteigert werden, dass nach dem Löschen das Videobild ausgelesen wird und in dem Fall, dass es nicht vollständig gelöscht wurde, nochmals gelöscht wird. Auf diese Weise wird die Möglichkeit fehlerhafter Löschvorgänge drastisch reduziert.

Abgesehen von einem unerwünschten Zeitversatz gibt es bei der Darstellung mehrerer Kamerabilder auf einem Monitor auch das Risiko, dass die Bilder einer falschen Kamera angezeigt werden. So ist z.B. bei der Wiener U-Bahn eine Kamera für die vordere Hälfte des Zugs vorgesehen und eine zweite Kamera für die hintere Hälfte des Zuges. Wird nun durch eine Fehlschaltung versehentlich zwei Mal das Bild für die hintere Hälfte des Zuges auf dem Monitor dargestellt (oder noch schlimmer das Bild eines Zuges auf dem gegenüberliegenden Bahnsteig), ist das auf den ersten Blick nicht auffällig erkennbar, und es besteht die Gefahr, dass der Fahrer die Türen schließt, obwohl noch Fahrgäste aus- oder einsteigen.

Um dies zu verhindern, ist nach einem weiteren Merkmal der Erfindung vorgesehen, dass die Signale mit einem Identifizierungscode versehen werden und dass dieser Identifizierungscode überprüft wird, um sicherzustellen, dass bei Vollbilddarstellung das richtige Bild dargestellt wird bzw. dass bei der gemeinsamen Darstellung der Bilder auf einem Monitor die einzelnen Bilder an der richtigen Stelle angezeigt werden.

Im Falle von Analogtechnik, also im Falle der ersten Ausführungsform der Erfindung, ist es üblich, dass die von den Videokameras eintreffenden Analogsignale zunächst Eingängen einer Videomatrix zugeführt werden, die die Analogsignale je nach Ansteuerung an bestimmte Ausgänge weiterleitet. Auf diese Weise ist es möglich, auf den Monitor jede beliebige Videokamera aufzuschalten, oder aber das kombinierte Bild mehrerer Videokameras, das auch dieser Videomatrix zugeführt wird. Solche Schaltungen, die analoge Signale je nach digitaler Ansteuerung durchschalten, können aber Fehlfunktionen haben, insbesondere bei starken elektromagnetischen Störungen. Es kann also passieren, dass der Fahrer die Videokamera für den hintersten Teil des Zuges aufschalten möchte, weil er beim kombinierten Bild bemerkt hat, dass dort möglicher Weise eine Türe blockiert wird, aber nach Umschaltung tatsächlich dann einen anderen Teil des Zuges sieht und fälschlich davon ausgeht, dass alle Türen ordnungsgemäß geschlossen sind. Um solch eine Fehlfunktion zu verhindern ist nach einer Ausgestaltung der Erfindung vorgesehen, dass dieser Identifizierungscode nach der Videomatrix detektiert wird um zu überprüfen, ob das richtige Signal durchgeschaltet wurde.

Es ist am sichersten, wenn die Identifizierungscodes auf die Analogsignale aufmoduliert werden und nach der Videomatrix demoduliert werden. Alternativ dazu könnte man die Identifizierungscodes auch dem Videosignal überlagern, zweckmäßiger Weise natürlich in einem anderen Frequenzbereich, aber da besteht die Gefahr, dass die Identifizierungscodes herausgefiltert werden.

Wenn der Identifizierungscode bereits in den Videokameras aufmoduliert wird, dann ist auch erkennbar, wenn die Leitungen der Videokameras vertauscht angeschlossen sind. Allerdings können dann keine Standard-Kameras mehr verwendet werden.

Wenn das Videosignal der Videobilder ein Standardvideosignal mit Schwarzschulter ist, kann der Identifizierungscode der Schwarzschulter des Videosignals aufgeprägt werden, bei Farbbildern vorzugsweise nach dem Farbburst (Chroma-Burst).

Wenn ein Identifizierungscode aufmoduliert wird, kann zusammen mit diesem auch der Zeitstempel aufmoduliert und auch zusammen mit diesem dekodiert werden. Dies kann unter Umständen den Schaltungsaufwand verringern.

Im Falle von Digitaltechnik, also der zweiten Ausführungsform, ist es zweckmäßig, wenn der Zeitstempel und gegebenenfalls der Identifizierungscode als Steganogramm dem Bild aufgeprägt wird. Dies ist eine gut bekannte Technik, man kann z.B. das LSB (least significant bit, Bit geringster Wertigkeit) von einigen Farbpixeln verwenden, um dort den Zeitstempel und den Identifizierungscode zu speichern. Dass das Bild dadurch minimal stärker rauscht, ist nur bei extrem hochwertigen Kameras und bester Beleuchtung erkennbar.

### Kurze Beschreibung der Zeichnungsfiguren

An Hand eines Ausführungsbeispiels wird die vorliegende Erfindung näher erläutert. In den Zeichnungen zeigt Fig. 1 ein Prinzipschaltbild gemäß einer ersten Ausführungsform, mit der das erfindungsgemäße Verfahren ausgeführt werden kann; Fig. 2 zeigt ein analoges Fernsehsignal mit aufgeprägtem Identifizierungscode, das bei der ersten Ausführungsform verwendet werden kann; und Fig. 3 zeigt ein Prinzipschaltbild einer zweiten Ausführungsform.

### Beschreibung der Ausführungsarten

Mehrere Videokameras 11 (im Beispiel sind es vier Videokameras) sind an eine Videomatrix 13 angeschlossen. Diese Videomatrix 13 ist ein digital angesteuerter, elektronischer Schalter, der an jeden Ausgang ein Signal eines beliebigen Eingangs weiterleiten kann. An diese Videomatrix 13 ist zumindest ein Monitor 16 angeschlossen (im Beispiel sind es zwei Monitore). Die Videomatrix 13 wird von einer Steuerung 14 angesteuert. Sie kann z.B. so angesteuert werden, dass der erste Monitor 16 das Bild der vierten Videokamera 11 zeigt und der zweite Monitor 16 das Bild der ersten Videokamera 11. Es können aber auch beide Monitore 16 dasselbe Bild anzeigen.

Sowohl die Videokameras 11 als auch die Monitore 16 sind Analoggeräte, d.h. die Videokameras 11 liefern Analogsignale und die Monitore 16 verarbeiten Analogsignale, ohne dass in diesen Geräten die Bilder jemals digitalisiert werden. Wenn ein Monitor 16 also das Bild einer Videokamera 11 anzeigt, kann es keine Zeitverzögerung geben.

Nun ist es aber oft erwünscht, dass auf einem Monitor 16 in vier Quadranten die Bilder von vier Videokameras 11 gleichzeitig angezeigt werden (oder in zwei Hälften die Bilder von zwei Videokameras 11). Um dies zu erreichen werden die Analogsignale von der Videomatrix 13 zu einem Analog-Digital-Konverter 17 geführt, wo sie digitalisiert und einem FPGA 18 (FPGA = Field Programmable Gate Array) zugeführt werden.

Mit Hilfe schneller Field Programmable Gate Arrays, sogenannter FPGAs, werden Reaktionszeiten im Bereich von Nanosekunden erreicht. Diese schnelle Reaktion ist bei den sonst üblichen Signalprozessoren nicht möglich, weil Signalprozessoren die hereinkommenden Signale sequenziell, nach den Vorgaben des Programms, abarbeiten. FPGAs sind hingegen eine programmierbare Hardware, es können bis zu 100 Prozesse parallel durch den Baustein geschleust werden, unabhängig von den einzelnen Schritten, wobei die Verarbeitung um bis zu 500 Mal schneller erfolgt als in einem Signalprozessor.

Dieses FPGA 18 speichert nun die vom Analog-Digital-Konverter 17 gelieferten Daten in einem Speicher (RAM) 19, sodass also vier Bilder von vier Videokameras 11 gespeichert sind. Aus diesen Bildern setzt das FPGA 18 neue Bilder zusammen (im Beispiel sind es zwei Bilder), z.B. die Bilder aller vier Videokameras 11 in den vier Quadranten eines neuen Bildes und die Bilder von zwei der vier Videokameras 11 in den beiden Hälften eines anderen neuen Bildes. Diese neuen Bilder, die im FPGA digital vorliegen, werden dann in einem Digital-Analog-Konverter 20 wieder in Analogsignale umgewandelt und der Videomatrix 13 zugeführt. Somit kann jeder Monitor 16 entweder ein Vierquadrantenbild, ein Zweihälftenbild oder das Bild einer jeden Videokamera 11 als Vollbild anzeigen, je nachdem, welche Signale die Videomatrix 13 an den entsprechenden Ausgang legt.

Die Erfindung besteht nun darin, dass das FPGA 18 beim Abspeichern der Bilder zusätzlich zu jedem Bild einen Zeitstempel abspeichert und diesen Zeitstempel überprüft, wenn es das neue Bild zusammensetzt. Liegt der Zeitstempel zu lange zurück, wird das gespeicherte Bild ignoriert, d.h. der entsprechende Teil des neuen Bildes (ein Quadrant oder eine Hälfte) bleibt dunkel. (Es kann natürlich auch eine Farbe oder ein Muster dargestellt werden.) Dadurch ist es unmöglich, dass das neue Bild auf Basis veralteter Daten zusammengesetzt wird.

Die Erfindung verhindert, dass veraltete Information angezeigt wird. Es versteht sich aber, dass dies nur selten eintreten soll. Die gesamte Anordnung ist daher so konzipiert, dass die Verzögerungen im Normalfall sehr gering sind.

Als zusätzliche Sicherheitsmaßnahme löscht das FPGA 18 die Daten im Speicher 19, sobald sie ausgelesen wurden. Es kann somit jedes Bild jeder Videokamera 11 nur ein Mal verwendet werden, um ein neues Bild aufzubauen.

Ein weiteres Sicherheitsrisiko stellt die Videomatrix 13 dar, denn es sind Fälle berichtet worden, dass solch eine Videomatrix die Ein- und Ausgänge falsch verschaltet hat, wenn starke Störfelder aufgetreten sind. Das kann zur Folge haben, dass der Fahrer auf dem Monitor 16 das Bild einer anderen Videokamera 11 sieht, als er eingestellt hat.

Um auch dieses Sicherheitsrisiko zu eliminieren, sind vor der Videomatrix 13 Modulatoren 12 und hinter der Videomatrix 13 Demodulatoren 15 vorgesehen. Die Modulatoren 12 prägen dem Videosignal einen Identifizierungscode auf, der von den Demodulatoren 15 dekodiert werden kann. Die Steuerung 14 informiert nun jeden Demodulator 15, welcher Identifizierungscode auf Grund der Ansteuerung der Videomatrix 13 zu erwarten ist. Wenn der Identifizierungscode nicht mit dem Sollwert übereinstimmt, unterbricht der Demodulator 15 das Videosignal. Auch in diesem Fall erfolgt eben im Fehlerfall keine Anzeige, was entschieden besser ist als eine falsche Anzeige.

Das Aufprägen von zusätzlichen Signalen in ein Videosignal ist weit verbreitet. Alle Farbfernsehsysteme verwenden diese Methode, um einen Farbburst zum Synchronisieren zu übertragen. Ähnliche Lösungen werden in der Patentliteratur (Gruppe H04N7/025 der internationalen Klassifikation) in großer Zahl beschrieben.

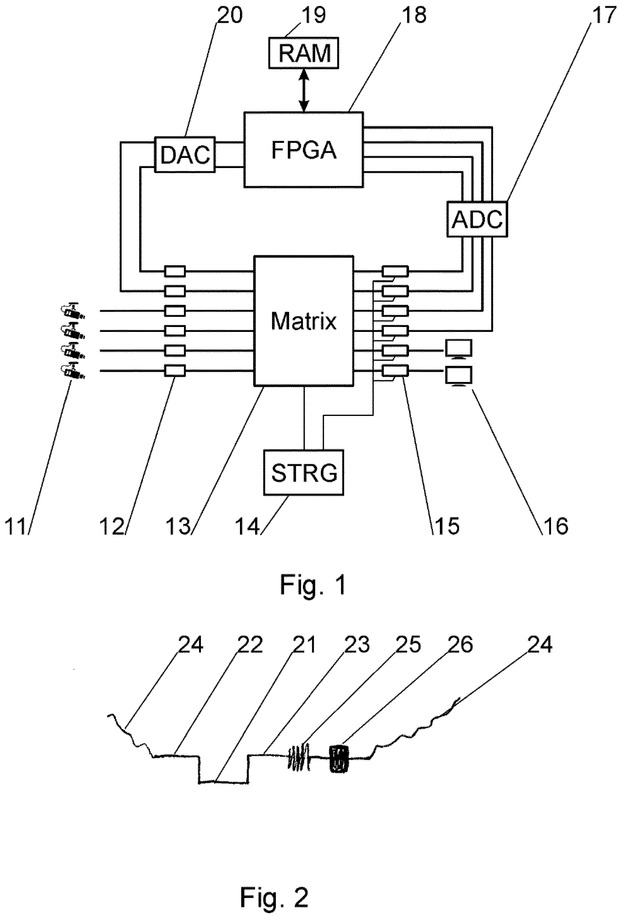

Anhand von Fig. 2 wird das Aufprägen des Identifizierungscodes erklärt. Dieser Identifizierungscode wird im Videosignal, und zwar auf der Schwarzschulter, eingeprägt. Ein klassisches FBAS-Signal weist im Zeile-Modus einen Zeile-Synchronimpuls 21 auf, der eine voreilende Schwarzschulter 22 und eine nacheilende Schwarzschulter 23 besitzt. Die Schwarzschultern 22 und 23 werden als Referenz für ein schwarzes Bild herangezogen, die Werte werden im Bildschirm für die sogenannte Klemmung verwendet. Der Bildinhalt ist an Stelle 24 codiert. Ein Farbburst 25, der die Referenzsignale für die Farbmodulation transportiert, liegt auf der hinteren Schwarzschulter 23. Der Identifizierungscode 26 wird vorzugsweise nach dem Farbburst 25 in das FBAS Signal eingeschrieben. Der Identifizierungscode 26 kann aus einer digitalen Codierung im Bereich von Nanosekunden bestehen, weil moderne Bausteine diese Geschwindigkeiten leicht verarbeiten können.

Bei einer konkreten Lösung wurde ein modernes, hoch leistungsfähiges FPGA 18 verwendet, das die digitalen Daten aller vier Videokameras 11 parallel einliest und alle Signale mit einem Zeitstempel versieht. Mit dem Einlesen werden die Bilder auch schon für die spätere Position am Bildschirm vorbereitet, nicht benötigte Bildinhalte weggeschnitten und das Bild einer jeden Videokamera 11 wird in einen entsprechenden Bereich des Speichers 19 geschrieben.

Eine Schaltungsgruppe im FPGA 18 stellt anschließend die notwendigen Daten für ein kombiniertes Bild wieder her, sofern die Zeitstempel nicht zu lange zurückliegen. Um die Sicherheit zu erhöhen und zum Markieren von Fehlfunktionen wird der Ausgangsspeicher nach dem Auslesen und Erstellen des zusammengesetzten Bildes (der zusammengesetzten Bilder) sofort gelöscht, sodass keine stehenden Bilder angezeigt werden können.

Durch die beschriebenen Maßnahmen ist es möglich, die Durchlaufzeit von Videosignalen innerhalb des FPGAs auf maximal 100 ms (Millisekunden) zu begrenzen und zu überprüfen sowie die richtige Verschaltung in der Videomatrix 13 zu überprüfen. Die Durchlaufzeit von 100 ms ergibt sich aus dem asynchronen Betriebszustand: Ein analoges Videosignal benötigt 40 ms für die gesamte Bildübertragung (bei 25 Hz). Da die Videokameras 11 nicht synchronisiert sind, kann es maximal 80 ms dauern, bis die Daten aller Videokameras 11 abgespeichert sind. Diese Zeit darf das Bild im Speicher 19 liegen, mit einer Sicherheitsreserve von 20 ms. Alles, was länger im Speicher 19 liegt, gilt als nicht mehr aktuell und darf nicht mehr weiter angezeigt werden. Diese Zeit von 100 ms liegt bei höchstens der Hälfte der Reaktionszeit einer aufmerksamen Person. Damit gilt die Übertragung als ausreichend zeitnahe, um Steuerungen durchzuführen.

Um zusätzlich zu verhindern, dass im Speicher 19 Bildteile von vorhergehenden Bilddaten liegen bleiben können, wird der Speicher 19, in welchem der FPGA 18 die Bilder zu einem dualen Bild oder zu einem Quadrantenbild zusammensetzt, nach dem Auslesen gelöscht, mit "0" beschrieben. Dieser Nullwert entspricht einem schwarzen Bildschirm bei der Umwandlung in ein Videosignal. In einem unmittelbar darauf folgenden Schritt wird der Speicher erneut ausgelesen, um sicherzustellen, dass der Inhalt des Speichers gelöscht wurde. Dieses Auslesen zur Kontrolle wird nur intern verarbeitet, es darf keine Information mehr vorhanden sein. Im Falle einer Fehlfunktion, einem zweiten Auslesen als Bild, würde ein schwarzer Bildinhalt an den Bildschirm übertragen, womit der Fehler auch für einen normalen Beobachter als solcher zu erkennen ist.

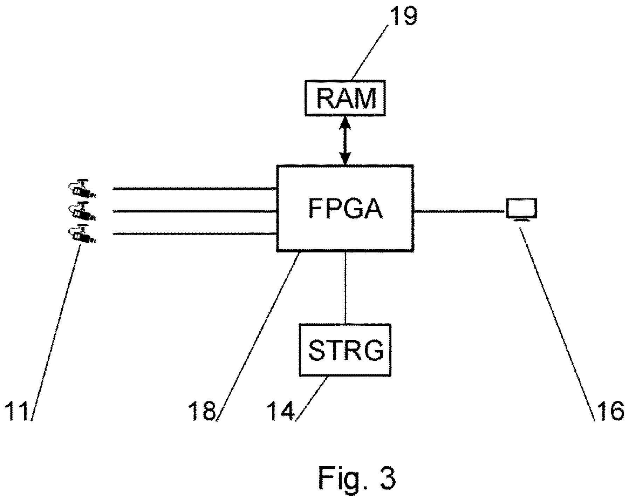

Im Gegensatz zur ersten Ausführungsform, die an Hand der Fig. 1 und 2 erläutert wurde und bei der möglichst von Analogtechnik Gebrauch gemacht wird, wird bei der zweiten Ausführungsform, die an Hand der Fig. 3 erläutert wird, von Digitaltechnik Gebrauch gemacht.

Fig. 3 zeigt das Prinzip eines elektronischen Rückspiegels, bei dem im einfachsten Fall drei Kameras 11 vorgesehen sind, die dem linken Außenspiegel, dem rechten Außenspiegel und dem Innenspiegel entsprechen. Diese drei Bilder werden zusammengesetzt und auf einem Monitor 16 wiedergegeben.

Als Basis für die digitale Bildübertragung dient die "SDI"-Schnittstelle, insbesondere HD-SDI (SMPTE 292M 1,485 Gbit/s und 1,485/1,001 Gbit/s, 720p, 1080i (HDTV)) und 12G UHD-SDI (SMPTE ST 2082 12 Gbit/s, 4K). D.h. über Koaxialleitung mit 75 Ohm Impedanz bzw. Zweidraht Twisted-Pair (CAT7) werden mit bis zu 12 Gbit/s digitale Videodaten von den Kamerasensoren weg übertragen.

Die Werte der Bildmatrix werden in einen digitalen seriellen Datenstrom umgewandelt, wobei für jedes Pixel Helligkeitswert und Farbwert als digitale Werte übertragen werden, normalerweise werden dafür 20 bit (10 bit für die Helligkeit und 10 bit für die Farbe) verwendet.

Gemäß der Erfindung wird nun von einigen dieser Werte das LSB (LSB=least significant bit, also das Bit mit der geringsten Wertigkeit) nicht zur Information über die Helligkeit bzw. über die Farbe verwendet, sondern für eine andere Information, nämlich einen Zeitstempel und gegebenenfalls für einen Identifizierungscode. Da mit 10 bit 1024 Werte dargestellt werden können, wird dadurch die mögliche Information auf 9 bit, also 512 Werte, reduziert. Dies ist aber in der Praxis immer noch mehr als ausreichend. Da bezüglich der Helligkeit bzw. der Farbe das für den Zeitstempel verwendete LSB "zufällig" ist, ergibt sich ein minimales Helligkeits- bzw. Farbrauschen, was aber bei normaler Betrachtung in keiner Weise erkennbar ist. Meist ist das Rauschen des Sensors ohnehin größer.

### (Anmerkung: Die Werte 0-3 und 1020-1023 sind reserviert und dürfen nicht für Helligkeits- bzw. Farbwerte verwendet werden. Es stehen also streng genommen nicht 1024, sondern nur 1016 Werte zur Verfügung.)

Gemäß der Erfindung wird also in den Kameras ein Zeitstempel und gegebenenfalls ein Identifizierungscode auf diese Weise den Bildern aufgeprägt; da dieser bei normaler Betrachtung nicht erkennbar ist, spricht man von Steganographie. Der Vorteil liegt darin, dass das normale SDI-Protokoll verwendbar bleibt, ohne die geringste Änderung, und dass diese Information bei der Deserialisierung und Speicherung des Bildes automatisch erhalten bleibt.

Es werden nun die digitalen Daten mehrerer Kameras in der Bildbearbeitungseinheit, die wiederum durch einen FPGA 18 realisiert ist, deserialisiert und in einem Speicher 19 abgespeichert. Dabei sind die Zeitstempel immer noch vorhanden. Wenn die Bilder im Falle eines digitalen Rückspiegels (da sind es idR mindestens drei Bilder) entzerrt ("dewarping") und nahtlos zusammengesetzt ("stitching") werden, könnte die steganographische Information dabei verloren gehen. Es ist daher zweckmäßig, zuvor die steganographisch eingebettete Information zu extrahieren und in einigen zusätzlichen Bytes jedes Bildes abzuspeichern. Wenn dann das zusammengesetzte Bild serialisiert und im SDI-Protokoll an den Monitor 16 (also an den "elektronischen Rückspiegel") übertragen wird, kann der Zeitstempel aller drei Bilder zu diesem Zeitpunkt überprüft werden; wenn der Zeitstempel verglichen mit der eigenen "Uhr" zu lange zurückliegt, wird an den Monitor 16 z.B. ein schwarzes Bild ausgegeben, sodass sofort erkennbar ist, dass kein aktuelles Bild verfügbar ist. Ebenso kann über den Identifizierungscode überprüft werden, ob z.B. der links dargestellte Bildinhalt tatsächlich von der links außen angebrachten Kamera stammt.

Weiters ist eine Steuerung 14 vorgesehen, mit welcher das FPGA gesteuert werden kann. Durch diese Steuerung 14 kann zum Beispiel festgelegt werden, dass nur das Bild der Kamera, die dem Innenspiegel oder einem der Außenspiegel entspricht, auf dem Monitor als Vollbild dargestellt wird, was beim Einparken manchmal günstig ist.

Obwohl bei der Darstellung eines SDI-Signals auf dem Monitor 16 kaum Verzögerungen eintreten können, kann aber natürlich auch das zusammengesetzte Bild mit einem Zeitstempel versehen werden, welcher dann vom Monitor 16 überprüft werden kann. Wenn das Bild einer der Kameras als Vollbild durchgeschaltet wird, ist der Zeitstempel ohnehin automatisch infolge der steganographischen Einbettung vorhanden. günstig ist.

Obwohl bei der Darstellung eines SDI-Signals auf dem Monitor 16 kaum Verzögerungen eintreten können, kann aber natürlich auch das zusammengesetzte Bild mit einem Zeitstempel versehen werden, welcher dann vom Monitor 16 überprüft werden kann. Wenn das Bild einer der Kameras als Vollbild durchgeschaltet wird, ist der Zeitstempel ohnehin automatisch infolge der steganographischen Einbettung vorhanden.

## Patentansprüche

1. Verfahren zum Einlesen und Aufbereiten von Bildern in Echtzeit bei einem elektronischen Rückspiegel,
bei welchem Rückspiegel wenigstens drei Videokameras (11) Bilder als serielles Digitalsignal in Form SDI-Signals liefern,
welche Videokameras einem linken Außenspiegel, einem rechten Außenspiegel und einem Innenspiegel entsprechen, wobei die Bilder in einem Speicher (19) abgespeichert werden,
wobei die Bilder zusammengesetzt und zumindest einem Monitor (16) zugeführt werden,
wobei alle Bilder in den Videokameras (11) mit einem Zeitstempel im least significant bit des Digitalsignals versehen werden,
wobei die Zeitstempel zusammen mit den Bildern durch eine Bildbearbeitungseinheit, die durch einen FPGA (18) realisiert ist, deserialisiert und
die Zeitstempel zusammen mit den Bildern im Speicher (19) abgespeichert werden,
wobei eine Steuerung vorgesehen ist, mit welcher der FPGA (18) gesteuert werden kann,
wobei die Bilder entzerrt und nahtlos zusammengesetzt werden und dann das zusammengesetzte Bild serialisiert wird,
wobei danach der Zeitstempel aller wiedergegebenen Bilder ausgelesen und mit der aktuellen Zeit verglichen wird und ein Signal zur Übertragung der Bilder an den zumindest einen Monitor nur dann dem zumindest einen Monitor (16) zugeführt wird, wenn alle Zeitstempel maximal eine vorgegebene Zeitspanne zurückliegen.

2. Verfahren nach Anspruch 1, **dadurch gekennzeichnet, dass** die abgespeicherten Bilder aufbereitet werden, nachdem sie mit dem Zeitstempel versehen wurden, dass der Zeitstempel nach der Aufbereitung ausgelesen wird und dass die aufbereiteten Bilder dem zumindest einen Monitor (16) zugeführt werden.

3. Verfahren nach einem der Ansprüche 1 bis 2, **dadurch gekennzeichnet, dass** die Signale mit einem Identifizierungscode (26) versehen werden und dass dieser Identifizierungscode (26) überprüft wird, um sicherzustellen, dass bei Vollbilddarstellung das richtige Bild dargestellt wird bzw. dass bei der gemeinsamen Darstellung der Bilder auf einem Monitor die einzelnen Bilder an der richtigen Stelle angezeigt werden.

## Claims

1. A method of reading and editing images in real time with an electronic rear-view mirror,
in which rear-view mirror at least three video cameras (11) supply images as a serial digital signal in the form of an SDI signal,
which video cameras correspond to a left exterior mirror, a right exterior mirror and an interior mirror,
wherein the images are saved in a memory (19),
wherein the images are assembled and delivered to at least one monitor (16),
wherein all images in the video cameras (11) are provided with a timestamp in the least significant bit of the digital signal,
wherein the timestamps are deserialised together with the images by an image processing unit realised by an FPGA (18) and the timestamps are saved in the memory (19) together with the images,
wherein a control is provided, by which the FPGA (18) can be controlled,
wherein the images are straightened out and seamlessly assembled and then the assembled image is serialised, wherein the timestamp of all rendered images is then read and compared to the current time and a signal for transmitting the images to the at least one monitor is only delivered to the at least one monitor (16) if all timestamps do not date back further then a predefined maximum timespan.

2. The method of claim 1, **characterised in that** the saved images are edited after being provided with the timestamp, **in that** the timestamp is read after editing and **in that** the edited images are delivered to the at least one monitor (16).

3. The method of any one of claims 1 and 2, **characterised in that** the signals are provided with an identification code (26) and **in that** said identification code (26) is verified to make sure that the correct image is shown in full-screen display and/or that the individual images are displayed in their correct positions when the images are shown together on one monitor.

## Revendications

1. Procédé d'importation et de traitement d'images en temps réel pour un rétroviseur électronique,
dans lequel rétroviseur au moins trois caméras vidéo (11) fournissent des images en tant que signal numérique sériel sous la forme d'un signal SDI,
lesquelles caméras vidéo correspondent à un rétroviseur extérieur gauche, un rétroviseur extérieur droit et un rétroviseur intérieur,
les images étant stockées dans une mémoire (19),
les images étant assemblées et transmises à au moins un écran (16),
toutes les images étant pourvues d'un horodatage dans le bit le moins significatif du signal numérique dans les caméras vidéo (11) ,
les horodatages étant désérialisés conjointement avec les images par une unité de traitement d'images réalisée par un FPGA (18) et
les horodatages étant enregistrés dans la mémoire (19) avec les images,
une commande avec laquelle le FPGA (18) peut être commandé pouvant être prévue,
les images étant égalisées et assemblées de manière transparente et puis l'image assemblée étant sérialisée, l'horodatage de toutes les images représentées étant ensuite lu et comparé à l'heure actuelle, et
un signal pour la transmission des images à l'au moins un écran n'étant transmis audit au moins un écran (16) que si tous les horodateurs ne remontent pas à plus d'une période prédéterminée.

2. Procédé selon la revendication 1, **caractérisé en ce que** les images stockées sont traitées après avoir été horodatées, **en ce que** l'horodatage est lu après le traitement et **en ce que** les images traitées sont transmises à l'au moins un écran (16) .

3. Procédé selon l'une des revendications 1 à 2, **caractérisé en ce que** les signaux sont munis d'un code d'identification (26) et **en ce que** ce code d'identification (26) est vérifié pour garantir que la bonne image est représentée en cas d'affichage plein écran ou que les différentes images sont affichées à la bonne place si les images sont représentées conjointement sur un écran.
